# EUROPEAN PATENT SPECIFICATION

(11) **EP 1 332 954 B1**
(45) Date of publication and mention of the grant of the patent: **21.06.2006**
(21) Application number: 03380017.8
(22) Date of filing: 31.01.2003
(51) Int. Cl.: B62D 61/12, B60G 11/46

(54) **Lifting device for travelling axles in industrial vehicles, trailers and semi-trailers**
Achsanhebevorrichtung in einem Nutzfahrzeug, einem Anhänger oder einem Sattelanhänger
Dispositif de relevage d'essieu pour véhicule industriel, remorque ou semi-remorque

(30) Priority: 31.01.2002 ES 200200236
(43) Date of publication of application: 06.08.2003
(73) Proprietor: Losada Alvarez, Agueda, 50003 Zaragoza (ES)
(72) Inventor: Losada Alvarez, Agueda, 50003 Zaragoza (ES)
(74) Representative: PROPI, S.L.

(56) References cited:
- EP-A- 0 431 673
- EP-A- 0 836 984
- EP-A- 0 941 915

## Description

### OBJECT OF THE INVENTION

The present invention refers to a device which has been especially designed for lifting a rolling axle of an industrial vehicle, trailer or semi-trailer when it has multiple axles, such that the corresponding wheels are kept independent from the ground during transport when, due to the features thereof, such as driving the vehicle with no load, it is not necessary for said axle or axles to participate.

The object of the invention is to achieve that the assembly of the lift device can be carried out on the outside of the support, on the ends of the straight pin, once the vehicle has finished the manufacturing process, with no need to modify the technical specifications of suspension manufacturers.

It thereby achieves that the assembly of the lift is carried out very quickly, safely and easily, without the vehicle losing its alignment in the area where the shock absorber arm is fixed to the support where the alignment and lock pin is located, both that of the axle to be lifted as well as that of the lift device thereof. The loss of the alignment of said axle is therefore prevented since the lifts are optional elements and in practice are assembled after the manufacturing process.

### BACKGROUND OF THE INVENTION

In many industrial vehicles, trailers or semi-trailers, hereinafter "industrial vehicle", of several axles, for the purpose of facilitating the turning of said industrial vehicle and preventing the unnecessary wear of at least the wheels corresponding to one of said axles, when the vehicle is traveling with no load, said axle is normally provided with a lift that can adopt two working positions, one in which the wheels corresponding to said axle are supported on the ground, in the same manner as the wheels of the remaining axles do, and another position in which the wheels are elevated, losing contact with the ground and being inoperative.

There are different types of lifts on the market which essentially consist of, for each one of the sides of the axle and from a shock absorber that is joined to the axle to be elevated, a pneumatic or hydraulic shock absorber regulating the functional position of the axle, and on the end thereof, a support associated with the pneumatic suspension which, through a swivel-mount thereon, acts on a bellows, rubber or membrane, which upwardly pushes the leaf spring arm, lifting it and consequently also lifting the axle associated therewith with the subsequent separation of the corresponding wheels from the ground.

The fundamental drawback that these systems have is based on the fact that the wheels of the truck must be perfectly aligned, said leaf spring arm must therefore be perfectly aligned with its support or kingpin. Given that, in practice and upon trying to assemble a conventional lift on said support, it is necessary to release the pin through which said support is coupled to the leaf spring arm in order to replace it with another longer one, in this operation, said alignment is lost between the support and leaf spring arm, thus losing the alignment of the axle with regard to said kingpin, making it tremendously difficult and costly to realign the assembly.

The applicant is the holder of Spanish patent application ES 2,008,498, which discloses a mechanism for centering and lifting the self-supported body on an automobile chassis, a patent which shows a solution that is structurally similar to the aforementioned ones which also uses a bellows system, as shown in the embodiment of figure 5, with the only exception being that it is intended for lifting the transport bodies, as previously mentioned, rather than being intended to lift a rolling and mobile axle, but being equally applicable to the latter Another lift device, comprising the features defined in the preamble of claim 1, is known from EP 0 941 915 A.

### DESCRIPTION OF THE INVENTION

The lift device proposed by the invention fully solves the aforementioned drawback, inasmuch as it permits the assembly thereof on the hinged coupling pin of the leaf spring arm to its support, with no need to disassemble said pin and, accordingly, without causing the misalignment of the assembly, which not only implies a considerable savings of time and operating complications as it is not necessary to disassemble said pin, but rather it also implies an economic savings concerning the time used as well as the materials used since it is not necessary t replace the primitive pin.

For this, the lift device according to the invention comprises the features defined in claim 1. More specifically, said lift device focuses its features on the fact that compared to the classic single-piece structuring, it is constituted of two laterally symmetrical parts, susceptible to being fixed together once they have been laterally coupled to the leaf spring arm support, which permits carrying out an articulated fixation of the lift device to the support by means of the simple introduction of respective bushings on the ends of the pin connecting said support to the leaf spring arm, which bushings remain immobilized in an axial direction as two integral parts of the lift device are assembled on them, parts which are in turn joined together, forming a practically single-piece assembly, when the elements connecting them are fixed, specifically the bellows, rubber or membrane and a "U"-shaped yoke additionally acting as a spacer for the plates or parts constituting the lift device, they permit incorporating a roller assembled with rotational freedom, which determines a rolling support during the actuation maneuver of the lift device, which rolling support acts on the lower part of the leaf spring arm, improving the contact conditions between these elements.

Advantageous embodiments of the invention are defined in the subclaims.

Another spacer located in opposition to the previous one also suitably connects the two parts constituting the lift device, it could even be an extension of these latter parts, a spacer through which the lift device acts as a stop on the lower area of the leaf spring arm support, so that, upon actuating the pneumatic bellows or membrane, it causes the elevation of the yoke which in turn causes the elevation of the leaf spring arm.

The guiding of the "U"-shaped yoke is achieved by means of connecting rods established between said element and any part of the lateral "L"-shaped parts, or on the bushings applied to the pin.

### DESCRIPTION OF THE DRAWINGS

To complement the description that is being made and for the purpose of helping to better understand the features of the invention, according to a preferred embodiment example thereof, a set of drawings is attached as an integral part of said description which, with an illustrative and non-limiting character, show the following:
Figure 1.- shows a perspective view of a lift device for a rolling axle of industrial vehicles, trailers or semi-trailers carried out according to the object of the present invention, which is duly facing the leaf spring arm support on which said axle is assembled.
Figure 2.- shows an exploded view of the essential elements participating in the device of the previous figure.

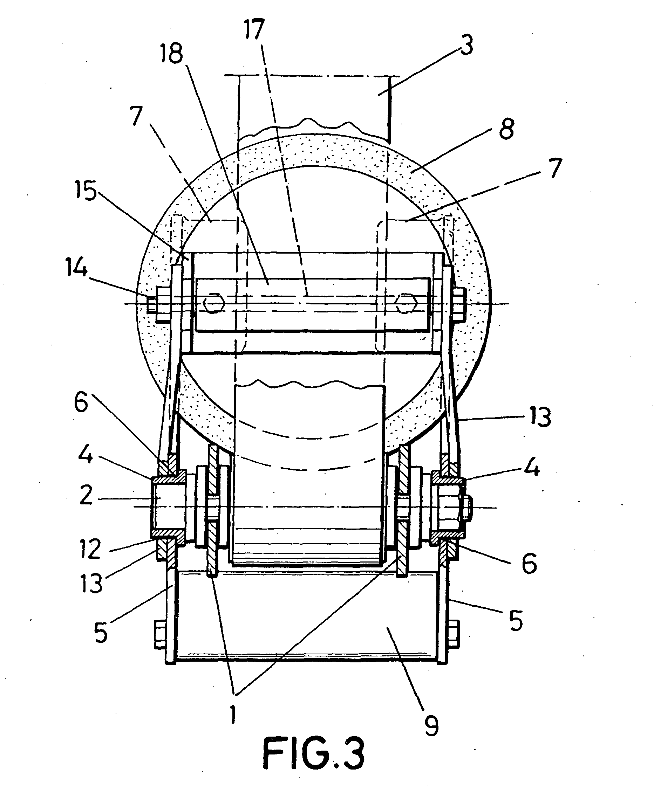

Figure 3.- finally shows a profile and cross-section view of a detail of the device from figure 1, duly assembled on the support also seen in said figure.

### PREFERRED EMBODIMENT OF THE INVENTION

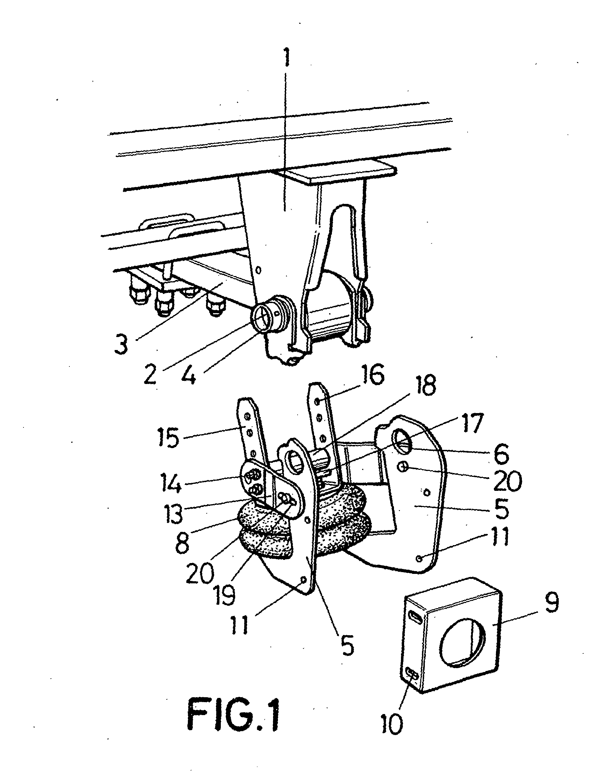

The indicated figures, specifically figure 1, show the support (1) of the pneumatic suspension, which is hinged to the end of the leaf spring arm (3) which, in conjunction with another located on the opposite side of the vehicle, constitute the holding means for the rolling axle of the industrial vehicle, trailer or semi-trailer intended to be temporarily lifted with the device of the invention.

Said device is materialized in a pair of bushings (4) intended to be coupled to the ends of the transversal pin (2) without disassembling, replacing or carrying out any type of manipulation on said pin (2), so that the previously mentioned misalignment does not occur, bushings (4) intended for coupling respective parts (5) similar to L-shaped plates, particularly visible in figure (2), provided with an ample circular hole (6) on their upper end for coupling to the respective bushing (4), and provided with orthogonal bracings (7) on the free end of their lower branch for placing and holding the bellows (8), rubber or membrane with which the lift acts when said bellows (8) receives the corresponding pressure.

Therefore, the parts (5), initially independent from one another, are fixed through said bellows (8) once they have been coupled, through their holes (6), to the bushings (4), assembled on the pin (2) of the support (1).

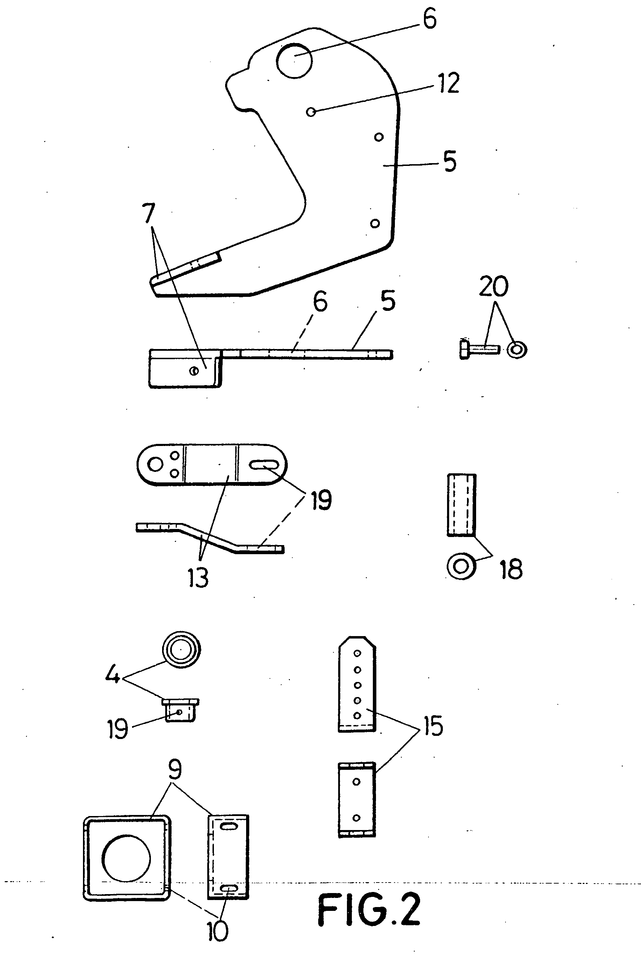

This fixation is complemented with a rear-lower spacer (9) shown in frontal and in profile view in figure 2 and seen in perspective view in figure 1, which is shaped like a prismatic-rectangular cup provided with slit holes (10) on its side walls through which its fixation to holes (11) operatively established on parts (5) is carried out by means of screws, permitting a certain positional regulation for the spacer (9), for the purpose that after its assembly, the latter acts on the support (1) on the lower end of the latter, constituting a support maintaining the lift device stable with regard to its side and main parts (5), whereas the actuation thereof is produced on the leaf spring arm (3) as will be seen below. Alternately, depending on the needs, this spacer (9) can be replaced by equivalent solutions, such as equally spaced tubes.

The vertical branch is hinged to the parts (5) through respective through pins placed in respective holes (12), connecting rods (13) which, on one end and in cooperation with screws (14), are fixed in turn to the side branches (15) of a second "U"-shaped spacer, on whose middle branch the bellows (8) acts, causing the lifting thereof due to rocking said connecting rods (13).

The side branches (15) of the second spacer are provided with respective longitudinal alignment of holes (16), branches held duly spaced with the cooperation of a spacing bar (17), and among them a roller (18) is established with rotational freedom, with the possibility of height regulation, roller which is responsible for acting on the leaf spring arm (3) when the bellows (8) is actuated, such that the cylindrical shape of the roller (18) and its rotational freedom on the yoke (15) minimize the effects of the contact of the lift device on the leaf spring arm (3) when the actuation thereof occurs.

The side branches (15), in addition to the previously mentioned alignment of holes (16), can incorporate other alignments of holes shifted forwards or backwards in order to be able to select the most suitable assembly for the roller (18) so that the latter is not hindered by the brakes and brake pads assembled on the axle.

The bushings (4) could have several small holes (19) for introducing a pin which provides the assembly with greater security if possible by preventing the parts (5) and (13), especially the latter, from fortuitously coming out.

Returning again to the connecting rods (13), these have slit holes (19) for the drift pins (20) joined to the parts (5), which improves the functioning of the bellows (8) by permitting a more linear shifting rather than circumferential, at the same time it lengthens the useful life thereof.

## Claims

1. A lift device for the rolling axle of industrial vehicles, trailers or semi-trailers, which, being of the type coupled to the pneumatic suspension support for the leaf spring arm to which the rolling axle to be lifted is associated, specifically of the type of those swivel mounted on the articulated drift pin (2) between said support and leaf spring arm, said lift device comprising a pair of "L"-shaped side parts (5) having a vertical and upper branch and provided on their upper end with respective holes (6) for coupling the "L"-shaped side parts (5) to the ends of said pin (2) by means of bushings (4) coaxially coupled to the ends of said pin, said "L"-shaped side parts (5) being fixed together by means of a bellows (8), rubber or pneumatic membrane acting as a lift means
**characterized in that**
the "L"-shaped side parts (5):
are substantially flat and
are initially independent of each other, , being subsequently fixed together after the assembly thereof on the pin (2) by means of bellows (8), rubber or pneumatic membrane,
the vertical and upper branch of said L"-shaped side parts (5), at mid-level, above the bellows (B), being hinged to respective side connecting rods (13) through slit holes (19), which on their front end are fixed to a "U"-shaped spacer (15), upon which the upper base of the bellows (8) acts and is joined with it, said "U" shaped spacer provided with a transversal roller (18) acting as a lifter on the leaf spring arm (3) when the bellows (8) is actuated.

2. A lift deviceaccording to claim 1, **characterized in that** said "L"-shaped side parts (5) are complementarily fixed together with the cooperation of a rear spacer (9), similar to a block, suitably screwed to the rear area of its vertical branches and which acts as a retention stop on the lower end of the support (1) of the leaf spring arm in the rocking of the lift device.

3. A lift device according to any of claims 1-2, **characterized in that** the "U"-shaped spacer comprises longitudinal alignments of holes (16) on its side branches (15) which permit positionally regulating said transversal roller (18), which is assembled with rotational freedom on a corresponding axle, with the cooperation of a spacing bar (17) established between the side branches (15) and which prevents any change in the distance between them.

## Patentansprüche

1. Eine Anhebevorrichtung für die Rollachse von Nutzfahrzeugen, Anhängern oder Sattelaufliegern, wobei diese der Ausführung entspricht, die mit dem Träger der pneumatischen Aufhängung des Blattfederarms verbunden ist, zu dem die anzuhebende Rollachse gehört, vor allem entsprechend der Ausführung, die schwenkbar auf dem Passstift (2) zwischen dem besagten Träger und dem Blattfederarm montiert ist, wobei das besagte Hebemittel ein Paar L-förmige, über einen vertikalen und oberen Arm verfügende Seitenteile (5) umfasst, die an ihrem oberen Ende mit diesbezüglichen Bohrungen (6) ausgestattet sind, um die L-förmigen Seitenteile (5) mit den Enden des besagten Stifts (2) mittels Buchsen (4) zu verbinden, die koaxial mit den Enden des besagten Stifts verbunden wurden, wobei die besagten L-förmigen Teile (5) mittels eines Gebläses (8), einer Membrane aus Gummi oder einer pneumatischen Membrane zusammen befestigt werden, die als Anhebemittel wirkt.
**dadurch gekennzeichnet, dass**
die L-förmigen Seitenteile (5):
signifikant flach sind, und
zunächst voneinander unabhängig sind, wobei sie anschließend an die Montage derselben auf der Buchse (2) mittels des Gebläses (8), einer Membrane aus Gummi oder einer pneumatischen Membrane zusammen befestigt werden,
wobei der vertikale und obere Arm der besagten L-förmigen Seitenteile (5) auf mittlerer Höhe über dem Gebläse (8) durch Schlitzbohrungen (19) drehbar an entsprechende seitliche Verbindungsstreben (13) angebracht ist, die an ihrem Kopfende an einem U-förmigen Abstandsstück (15) befestigt sind, auf das die obere Basis des Gebläses (8) einwirkt und mit dem sie verbunden ist, das besagte U-förmige Abstandsstück, das über eine Querrolle (18) verfügt, die als Hebevorrichtung auf den Blattfederarm (3) wirkt, wenn das Gebläse (8) betätigt wird.

2. Eine Anhebevorrichtung nach Anspruch 1, **dadurch gekennzeichnet, dass** die besagten L-förmigen Seitenteile (5) zusätzlich mit Hilfe eines hinteren Abstandsstückes (9) zusammen befestigt sind, ähnlich eines Blockes, das entsprechend am rückwärtigen Bereich seines vertikalen Arms angeschraubt ist, und das auf dem unteren Ende des Trägers (1) des Blattfederarms als Arretieranschlag bei der Schwenkbewegung der Anhebevorrichtung wirkt.

3. Eine Anhebevorrichtung nach irgendeinem der Ansprüche 1-2, **dadurch gekennzeichnet, dass** das U-förmige Abstandsstück Bohrungen (16) in Längsausrichtung auf dessen Seitenarmen (15) umfasst, die eine Positionsregulierung der besagten transversalen Rolle (18) erlauben, die mit Hilfe einer zwischen den Seitenarmen (15) angebrachten Abstandsstange (17) mit Drehfreiheit auf einer entsprechenden Achse montiert ist, und die jegliche Änderung des Abstandes zwischen diesen verhindert.

## Revendications

1. Un dispositif de levage pour l'axe de roulement de véhicules industriels, remorques ou semi-remorques, qui, appartenant au type couplé au support à suspension pneumatique en raison du bras de ressort à lame auquel l'axe de roulement qui doit être levé est associé, spécifiquement au type de ces pivots montés sur la cheville d'assemblage articulée (2) entre ledit support et le bras de ressort à lame, ledit dispositif de levage comprenant une paire de pièces latérales en forme de "L" (5) ayant une branche verticale et supérieure et pourvues à leur extrémité supérieure de trous correspondants (6) pour coupler les pièces latérales en forme de "L" (5) aux extrémités de ladite cheville (2) au moyen de bagues (4) couplées coaxialement aux extrémités de ladite cheville, lesdites pièces latérales en forme de "L" (5) étant fixées ensemble au moyen d'un soufflet (8), d'un caoutchouc ou d'une membrane pneumatique opérant comme un moyen de levage **caractérisé en ce que** les pièces latérales en forme de "L" (5) sont substantiellement plates et initialement indépendantes l'une de l'autre, étant ultérieurement fixées ensemble après leur assemblage sur la cheville (2) au moyen d'un soufflet (8), d'un caoutchouc ou d'une membrane pneumatique, la branche supérieure et verticale desdites pièces latérales en forme de "L" (5), à mi-niveau, au-dessus du soufflet (8), étant articulée à des tiges de connexion latérales respectives (13) à travers des trous fendus (19), qui à leur extrémité avant sont fixées à une entretoise en forme de "U" (15), sur laquelle la base supérieure du soufflet (8) agit et s'attache à elle, ladite entretoise en forme de "U" est munie d'un galet de came transversal (18) opérant comme une came sur le bras du ressort à lame (3) quand le soufflet (8) est actionné.

2. Un dispositif de levage selon la revendication 1, **caractérisé en ce que** lesdites pièces latérales en forme de "L" (5) sont de plus fixées ensemble à l'aide d'une entretoise arrière (9), semblable à un bloc, convenablement vissée à la zone arrière de ses branches verticales et qui opère comme une butée de rétention sur l'extrémité inférieure du support (1) du bras de ressort à lame dans le basculement du dispositif de levage.

3. Un dispositif de levage selon quelconque des revendications 1 - 2, **caractérisé en ce que** l'entretoise en forme de "U" comporte des alignements longitudinaux de trous (16) sur ses branches latérales (15) qui permettent de régler le positionnement dudit galet de came transversal (18), qui est monté avec une liberté de rotation, sur un axe correspondant à l'aide d'une barre d'espacement (17) placée entre les branches latérales (15) et qui empêche toute modification de la distance entre elles.
